Europäisches Patentamt

European Patent Office

Office européen des brevets

(11) Publication number: **0 231 551**
A1

(12) ## EUROPEAN PATENT APPLICATION

(21) Application number: 86202340.5

(51) Int. Cl.⁴: **B60D 1/00**

(22) Date of filing: **19.12.86**

(30) Priority: **20.12.85 NL 8503537**

(43) Date of publication of application:
**12.08.87 Bulletin 87/33**

(84) Designated Contracting States:
**AT BE CH DE ES FR GB GR IT LI LU NL SE**

(71) Applicant: **TOBO MADE B.V.**
**2e Industrieweg 3**
**NL-4921 XH Made(NL)**

(72) Inventor: **Smits, Frans Melchior**
**Tweede Industrieweg 3**
**NL-4921 XH Made(NL)**

(74) Representative: **van der Beek, George Frans**
**et al**
**Nederlandsch Octrooibureau Johan de**
**Wittlaan 15 P.O. Box 29720**
**NL-2502 LS 's-Gravenhage(NL)**

(54) **Detachable towing hook assembly.**

(57) Towing hook assembly having a carrier (1) which is permanently fastened to the vehicle and provided with a coupling part (2). A detachable fastened hook part (5) is provided with another coupling part (4). Both coupling parts (2, 4) can be put together by means of a pin (7) hole (8) assembly. Hole (8) is provided in coupling part (2) whilst pin (7) is provided in coupling part (4). By further introducing pin (7) in hole (8) a force is generated to coupling parts - (2, 4) giving a more intimate contact between these parts.

fig-2

EP 0 231 551 A1

## Detachable towing hook assembly

The present invention relates to a towing hook assembly comprising a carrier which is to be permanently fastened to the vehicle, and provided with a coupling part and a detachably fastenable hook part provided with another coupling part adapted to be connected to the first-mentioned coupling part, either one of which coupling parts is a peg while the other is provided with a hole.

A towing hook assembly of this kind is known from Dutch Patent Application No. 81.03733. The towing hook assembly described therein comprises a coupling part provided with a hole and a hook part which is in the form of a peg and is intended to be fitted therein. After the hook part has been attached a cross pin is inserted through the part provided with a hole and through the peg part, so that the two coupling parts are joined together. This arrangement has the disadvantage that it is complicated to attach, while during use it cannot be ensured that the detachable hook part will not rattle because of the load applied to it and because of manufacturing tolerances. In addition, manufacturing tolerances must be strict, since otherwise play will exist between the hook part and the hole to such an extent that the whole arrangement may be damaged by the shock load due to the towed trailer. Moreover, this construction has the disadvantage that the hook part is inserted into a hole extending in the direction of movement of the towing vehicle and necessarily lying some distance below the bumper, so that it remains visible when the hook part is removed and consequently spoils the appearance.

The present invention seeks to obviate these disadvantages.

With a towing hook assembly of the kind described above this aim is achieved in that the hole and the peg both have an at least partly conical shape with the conical portions lying one against the other in the assembled state, and that the peg is provided, in or near the conical portion, with a bore in which a movable pin is disposed, of which one end is at last partly chamfered and which is urged by spring pressure in the direction of that end, while in the coupling part provided with a hole a recess is provided at the site of the pin in the assembled state of the towing hook assembly, in such a manner that when the towing hook assembly is in the assembled state the pin applies to the recess, by its chamfered portion, a force further clamping the two coupling parts together.

Since both the hole and the peg are made at least partly conical in the portions in contact with one another, and since a force is applied by the peg, pressing these two conical portions further into contact with one another, any play which exists will be taken up. Consequently, less precise manufacturing tolerances are required, while the conical surfaces need extend only over a short distance on the respective parts. This also provides the advantge that the hook part can easily be removed when not in use, and jamming is avoided. By "hook part" is here meant not solely a bar provided with a towing ball, but also any construction which can be used instead, such as a bicycle carrier.

In one advantageous embodiment a projection is provided on the peg, near the conical portion, and the coupling part provided with a hole has a cutout disposed in such a manner that when the assembly is assembled the projection fits into the cutout with a close fit. The hook part is thus secured against turning about the axis through the cone.

In another advantageous embodiment the axis of the peg extends, in the assembled state, substantially at right angles to the plane in which the vehicle is situated. Consequently the pin has practically no load to take, since the load is substantially taken by the hole and peg coupling.

In yet another advantageous embodiment the coupling part provided with the peg is the hook part. This means that a hole is formed in the carrier, so that a particularly economical construction can be obtained because, for example, a block provided with this hole can be welded to tubular parts joined to the vehicle. A particularly rigid but nevertheless simple construction is obtained in this way.

In one particular embodiment of this kind the hole in the coupling part flares downwardly. The hook part is then pushed from below into the carrier. It is thus possible for the carrier to be placed out of sight behind the bumper of a vehicle.

The bore in the peg may be a through bore, while at the end of the pin which is not conical a lever mechanism is provided to move the pin into and out of the recess for the attachment and detachment respectively of the towing hook assembly.

The pin can be driven into the recess in the hole by means of a helical spring disposed around it in the bore in the peg.

The invention will now be explained in greater detail with reference to a preferred embodiment, which is illustrated in the drawings, in which:

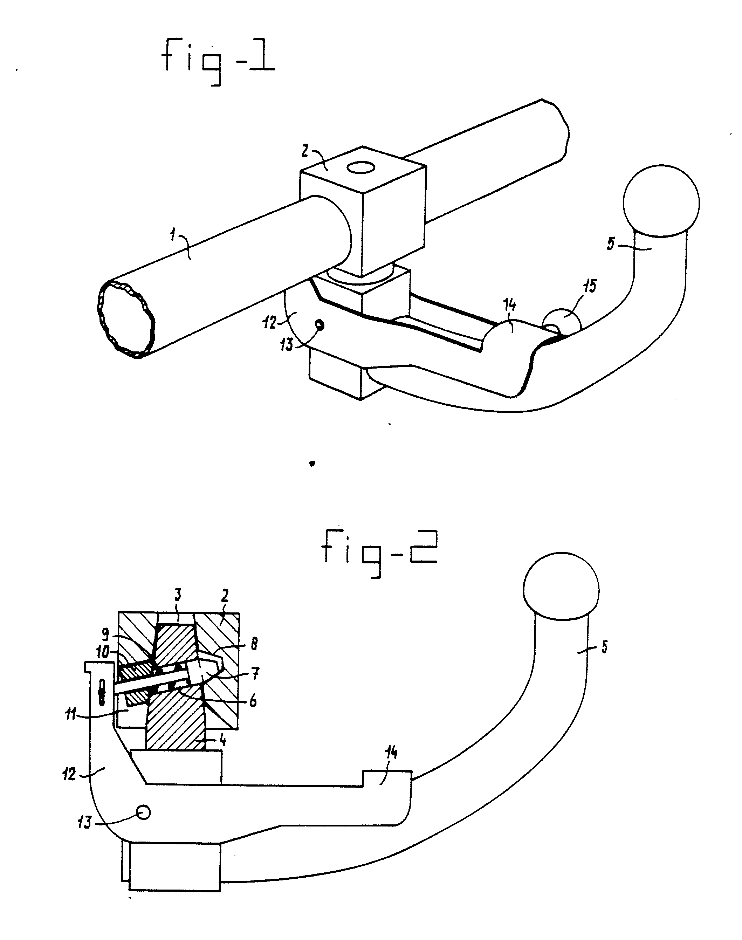

Figure 1 is a view in perspective of the towing hook assembly according to the present invention, and

Figure 2 is a side view, partly in cross-section, of the towing hook assembly shown in Figure 1.

The towing hook assembly shown in the drawings comprises a carrier 1, which is to be permanently fixed to the vehicle (not shown) and to which is fastened a coupling part 2 provided with a hole 3. The construction may consist of a tubular carrier 1 in which a block is welded to form the coupling part 2. The hole 3, which is conical, receives a correspondingly conical peg 4 of a hook part 5. In the drawing the hole 3 and the peg 4 are shown lying one against the other in conical form over their entire periphery. However, only certain parts of the peg 4 or the hook part 5 may obviously be provided with a conical surface, or both of them may be conical in certain portions which lie one against the other in the assembled state. The peg 4 is provided with a bore 6 in which a .pin 7 is disposed. One end of the pin enters a recess 8 in the assembled state. Either this end or the recess 8 or both is or are tapered in order to apply an upward force to the peg 4 by driving the end of the pin 7 in the outward direction. This outwardly directed force is obtained by means of a helical spring 9 which is disposed around the stem of the pin and which bears against a projection 10, which in turn enters a cutout 11 in the coupling part. Like the hole 3, this cutout 11 may be chamfered in order to facilitate the introduction of the hook part. The insertion of the projection 10 into the cutout 11 prevents the rotation of the hook part about the axis of the peg 4. In order to enable the pin 7 to be removed from the recess 8, a lever mechanism 12 is attached to the other end of it. This lever mechanism turns about the axis 13, and when the end 14 is raised the pin 7 is moved out of the recess 8. In order to prevent the end 14 from moving upwards during travel, it may be provided with locking means 15 known per se, which may for example comprise a spring-loaded pawl entering a hole in the hook part. The end 14 may also be co constructed that when a towbar is attached to the ball it is impossible to move the lever. When the peg 4 is inserted, it will be locked fast in the hole 3 through the driving action of the pin 7. This self-locking construction prevents the loosening of the coupling under load, which would result in play or the complete detachment of the connection. In addition, any tolerances that may exist are thus taken up. The materials used for the construction of the towing hook assembly may be any materials known in the prior art.

Furthermore, it is possible for the customary hook part to be replaced by a bicycle carrier or the like provided with a peg and pin construction of the type described above and fitted into the hole 3.

The range of utilization of the towing hook assembly is thereby enlarged. while the construction of the bicycle carrier can be far more practical than customary types.

Although the abovedescribed embodiment is a preferred embodiment, no unnecessary restrictions with regard to the scope of the present invention should be derived from it.

## Claims

1. Towing hook assembly comprising a carrier which is to be permanently fastened to the vehicle, and provided with a coupling part and a detachably fastened hook part provided with another coupling part adapted to be connected to the first-mentioned coupling part, either one of which coupling parts is a peg while the other is provided with a hole, characterized in that the hole and the peg both have an at least partly conical shape with the conical portions lying one against the other in the assembled state, and that the peg is provided, in or near the conical portion, with a bore in which a displaceable pin is situated, of which one end is at least partly chamfered and which is urged by spring pressure in the direction of that end, while in the coupling part provided with a hole a recess is provided at the site of the pin in the assembled state of the towing hook assembly, in such a manner that when the towing hook assembly is in the assembled state the pin applies to the recess, by its chamfered portion, a force further clamping the two coupling parts together.

2. Detachable towing hook assembly according to Claim 1, characterized in that a projection is provided on the peg, near the conical portion, and the coupling part provided with a hole has a cutout disposed in such a manner that when the assembly is assembled the projection fits into the cutout with a close fit.

3. Detachable towing hook assembly according to one of the preceding claims, characterized in that the axis of the peg extends, in the assembled state, substantially at right angles to the plane in which the vehicle is situated.

4. Detachable towing hook assembly according to one of the preceding claims, characterized in that the coupling part provided with the peg is the hook part.

5. Detachable towing hook assembly according to one of Claims 3 and 4, characterized in that the hole in the coupling part flares downwardly.

6. Detachable towing hook assembly according to one of the preceding claims, characterized in that the bore in the peg is a through bore and that at the other end of the pin a lever mechanism is attached in order to operate the pin.

7. Detachable towing hook assembly according to one of Claims 1 to 7, characterized in that a helical spring is disposed around the pin.

8. Detachable towing hook assembly according to Claim 4, 6 or 7, characterized in that the operating handle of the lever mechanism is situated near the hook part.

9. Detachable towing hook assembly according to Claim 8, characterized in that the operating handle is provided with a locking mechanism cooperating with the hook part.

10. Detachable towing hook assembly according to Claim 8 or 9, characterized in that the lever mechanism is so constructed that before the pin is removed from the recess the operating handle must be moved away from the hook part.

11. Detachable towing hook assembly according to Claim 9 or 10, characterized in that the operating handle is attached in such a manner that when the trailer is fastened to the hook part the handle cannot be operated.

fig-1

fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 160 934 (W. JURGENS) <br> * Whole document * | 1-7 | B 60 D 1/00 |
| Y | DE-A-2 935 385 (DAIMLER-BENZ) <br> * Page 4, line 25 - page 5, line 13; figure 2 * | 1-7 | |
| A | GB-A-2 067 147 (ORIS METALLBAU KG) <br> * Whole document * | 1-11 | |
| A | DE-A-3 230 364 (ORIS METALLBAU KG) <br> * Whole document * | 1-11 | |
| A | GB-A-2 128 567 (ORIS METALLBAU KG) <br> * Whole document * | 1-11 | **TECHNICAL FIELDS SEARCHED (Int. Cl.4)** <br><br> B 60 D 1 <br> B 60 R 9 |
| A | DE-A-2 822 662 (PEKA-FAHRZEUGBAU) <br> * Whole document * | 1 | |

The present search report has been drawn up for all claims

| Place of search | Date of completion of the search | Examiner |
|---|---|---|
| THE HAGUE | 02-04-1987 | LINTZ C.H. |